# EUROPEAN PATENT APPLICATION

(11) **EP 2 716 705 A1**
(43) Date of publication of application: **09.04.2014**
(21) Application number: 12794044.3
(22) Date of filing: 30.05.2012
(51) Int. Cl.: C08L 27/18, C08F 214/18, C08F 216/06, C08F 216/12, C08J 9/42, C08L 29/04, C08L 29/10

(54) **HYDROPHILIZING AGENT COMPOSITION, HYDROPHILIZATION METHOD, HYDROPHILIZED RESIN POROUS BODY, AND METHOD FOR PRODUCING HYDROPHILIZED RESIN POROUS BODY**

(30) Priority: 03.06.2011 JP 2011125049
(71) Applicant: Asahi Glass Company, Limited, Chiyoda-ku Tokyo 100-8405 (JP)
(72) Inventor: YAMAMOTO, Hiromasa, Tokyo 100-8405 (JP); YAMAMOTO, Tatsuya, Tokyo 100-8405 (JP); MORIZAWA, Yoshitomi, Tokyo 100-8405 (JP)
(74) Representative: Müller-Boré & Partner Patentanwälte PartG mbB
(86) International application number: PCT/JP2012/063983
(87) International publication number: WO 2012/165503

(57) **Abstract**

To provide a hydrophilizing agent composition capable of efficiently hydrophilizing a resin porous material and imparting excellent permeability, a hydrophilizing method using the hydrophilizing agent composition, a method for producing a hydrophilized resin porous material, and a hydrophilized material.

A hydrophilizing agent composition comprising a copolymer having an alternating copolymerization ratio of repeating units represented by the following formula (1) and repeating units represented by the following formula (2) of at least 95%, and a solvent: 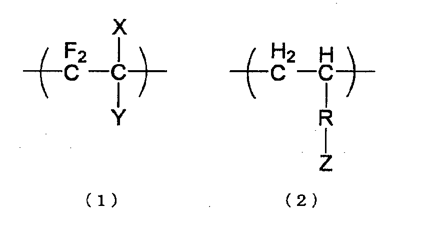 in the formula (1), each of X and Y which are independent of each other, is H, F, CF₃ or Cl; in the formula (2), Z is OR¹, NHR², COOR³ or SO₃R⁴, R is a single bond, a bivalent linking group which may contain an ethereal oxygen atom, or a bivalent linking group which may contain a cyclic structure, and each of R¹ to R⁴ which are independent of one another, is H or a monovalent organic group; provided that in the repeating units represented by the formula (2) contained in the copolymer, the proportion of the repeating units wherein each of R¹ to R⁴ is H is at least 50 mol%.

## Description

### TECHNICAL FIELD

The present invention relates to a hydrophilizing agent composition to be used for hydrophilizing various materials such as a resin porous material, a hydrophilizing method using the hydrophilizing agent composition, a hydrophilized resin porous material and its production method.

### BACKGROUND ART

Heretofore, a resin porous material has been used for a separation membrane such as a filtration membrane or a medical filter or for a battery separator. Usually a resin porous material is hydrophobic and thereby has a low affinity with water. Accordingly, a technique to hydrophilize a resin porous material has been widely used for the application to a separation membrane to be used for treatment of an aqueous liquid such as water or an aqueous solution. The resin porous material will get an affinity for water by hydrophilization, and the permeability will improve. The improvement in the permeability brings advantages such as an increase in the filtration flow rate when a liquid is passed, and a decrease in the filtration pressure.

As a method for hydrophilizing a resin porous material, for example, a method of impregnating the resin porous material with a hydrophilic monomer and carrying out graft polymerization (Patent Document 1), a method of impregnating the resin porous material with a hydrophilic polymer, and crosslinking and fixing the polymer by ultraviolet rays (Patent Document 2) and the like have been reported.

### PRIOR ART DOCUMENTS

### PATENT DOCUMENTS

- Patent Document 1:: JP-A-5-131124
- Patent Document 2:: JP-B-7-119316

### DISCLOSURE OF INVENTION

### TECHNICAL PROBLEM

However, the method of carrying out graft polymerization of a hydrophilic monomer as disclosed in Patent Document 1, remaining of the hydrophilic monomer is inevitable. The hydrophilic monomer remaining in the resin porous material may cause pollution of an aqueous liquid and is thereby unsuitable for a separation membrane for an aqueous liquid.

By the method of crosslinking the hydrophilic polymer by ultraviolet rays as disclosed in Patent Document 2, the hydrophilic polymer is less likely to infiltrate into pores since it has a low affinity with the resin porous material which is hydrophobic, and even if it infiltrates, the pores of the resin porous material are clogged by crosslinking, whereby no sufficient effect of improving the permeability will be achieved.

Further, each of the methods as disclosed in Patent Documents 1 and 2 requires a large-sized special apparatus.

Under these circumstances, the present invention provides a hydrophilizing agent composition capable of efficiently hydrophilizing a resin porous material and imparting excellent permeability, a hydrophilizing method using the hydrophilizing agent composition, a method for producing a hydrophilized resin porous material, and a hydrophilized material.

### SOLUTION TO PROBLEM

The present invention provides a hydrophilizing agent composition, a hydrophilizing method, a hydrophilized resin porous material and its production method, according to the following [1] to [15].
[1] A hydrophilizing agent composition comprising a copolymer having an alternating copolymerization ratio of repeating units represented by the following formula (1) and repeating units represented by the following formula (2) of at least 95%, and a solvent: 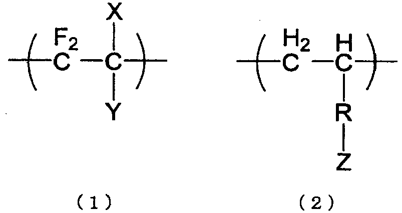 in the above formula (1), each of X and Y which are independent of each other, is H, F, CF₃ or Cl;
   in the above formula (2), Z is OR¹, NHR², COOR³ or SO₃R⁴, R is a single bond, a bivalent linking group which may contain an ethereal oxygen atom, or a bivalent linking group which may contain a cyclic structure, and each of R¹ to R⁴ which are independent of one another, is H or a monovalent organic group;
   provided that in the repeating units represented by the above formula (2) contained in the copolymer, the proportion of the repeating units wherein R¹ is H is at least 50 mol%.
[2] The hydrophilizing agent composition according to the above [1], wherein the content of the alternating copolymer is from 0.01 to 10 mass% based on the total mass of the hydrophilizing agent composition.
[3] The hydrophilizing agent composition according to the above [1] or [2], wherein the number average molecular weight of the alternating copolymer is from 3,000 to 500,000, and the molecular weight distribution (Mw/Mn) is from 1 to 5.
[4] The hydrophilizing agent composition according to any one of the above [1] to [3], wherein X is F, and Y is F or Cl.
[5] The hydrophilizing agent composition according to any one of the above [1] to [4], wherein Z is OR¹.
[6] The hydrophilizing agent composition according to any one of the above [1] to [5], wherein R is a single bond, O(CH₂)ₙ or (OCH₂CH₂)ₘ (wherein n is an integer of from 2 to 4, and m is an integer of from 1 to 4).
[7] The hydrophilizing agent composition according to any one of the above [1] to [6], wherein the amount of the solvent in the hydrophilizing agent composition is from 70 to 99.9 mass%.
[8] The hydrophilizing agent composition according to the above [7], wherein the solvent contains an alcohol in a proportion of at least 70 mass%.
[9] A method for hydrophilizing a material, which comprises treating a material to be treated by using the hydrophilizing agent composition as defined in any one of the above [1] to [8].
[10] A method for producing a hydrophilized resin porous material, which comprises impregnating a resin porous material with the hydrophilizing agent composition as defined in any one of the above [1] to [8], followed by drying.
[11] The method for producing a hydrophilized resin porous material according to the above [10], wherein the resin constituting the resin porous material is a fluorinated resin.
[12] The method for producing a hydrophilized resin porous material according to the above [11], wherein the fluorinated resin is polytetrafluoroethylene or polyvinylidene fluoride.
[13] A hydrophilized material obtained by hydrophilizing a material to be treated with the hydrophilizing agent composition as defined in any one of the above [1] to [8].
[14] The hydrophilized material according to the above [13], wherein the material to be treated is a resin porous material, and the resin constituting the resin porous material is a fluorinated resin.
[15] The hydrophilized material according to the above [13] or [14], which is for a separation membrane for an aqueous liquid.

### ADVANTAGEOUS EFFECTS OF INVENTION

According to the present invention, it is possible to provide a hydrophilizing agent composition capable of efficiently hydrophilizing a resin porous material and imparting excellent permeability. Further, according to a hydrophilizing method using the hydrophilizing agent composition, a hydrophilized resin porous material and a hydrophilized material can efficiently be produced.

### BRIEF DESCRIPTION OF DRAWINGS

Fig. 1 is a ¹³C NMR chart (A) of copolymer (B1) and a ¹³C NMR chart (B) of copolymer (A1) in Preparation Example 1.
Fig. 2 is an IR chart (A) of copolymer (B1) and an IR chart (B) of copolymer (A1) in Preparation Example 1.

### DESCRIPTION OF EMBODIMENTS

### [Hydrophilizing agent composition]

### (Copolymer)

The hydrophilizing agent composition of the present invention comprises a copolymer (hereinafter also referred to as "alternating copolymer") having an alternating copolymerization ratio of repeating units represented by the following formula (1) (hereinafter also referred to as "repeating units (1)") and repeating units represented by the following formula (2) (hereinafter also referred to as "repeating units (2)") of at least 95%:

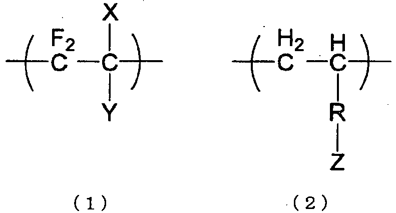

In the above formula (1), each of X and Y which are independent of each other, is H, F, CF₃ or Cl.

In the above formula (2), Z is OR¹, NHR² , COOR³ or SO₃ R⁴. R is a single bond, a bivalent linking group which may contain an ethereal oxygen atom, or a bivalent linking group which may contain a cyclic structure. Each of R¹ to R⁴ which are independent of one another, is H or a monovalent organic group.

Here, in the repeating units (2) contained in the alternating copolymer, the proportion of the repeating units wherein each of R¹ to R⁴ is H is at least 50 mol%.

Repeating units (1) are repeating units which are hydrophobic.

In the formula (1), X is H, F, CF₃ or Cl. Preferred is F in view of high hydrophobicity of the repeating units (1). One type or two or more types of X may be present in the alternating copolymer, however, one type is preferred in view of stable production.

Y is H, F, CF₃ or Cl. In view of high hydrophobicity of the repeating units (1), F is preferred. Further, in view of a high heat resistance of the alternating copolymer, Cl is preferred. One type or two or more types of Y may be present in the alternating copolymer, however, one type is preferred in view of stable production.

The repeating units (1) are preferably one wherein X is F, and Y is F or Cl, in view of availability of the monomer.

In the formula (2), Z is OR¹ , NHR², COOR³ or SO₃ R⁴, and each of R¹ to R⁴ which are independent of one another, is H or a monovalent organic group. Here, in the repeating units (2) contained in the alternating copolymer, the proportion of the repeating units wherein each of R¹ to R⁴ is H is at least 50 mol%, preferably from 70 to 100 mol%, particularly preferably from 85 to 100 mol%.

Among the repeating units (2), repeating units wherein each of R¹ to R⁴ is H, that is, repeating units wherein Z is OH, NH₂ , COOH or SO₃H, are hydrophilic repeating units. Further, repeating units (2) wherein each of R¹ to R⁴ is a monovalent organic group, are repeating units having lower hydrophilicity than the repeating units (2) wherein each of R¹ to R⁴ is H. Accordingly, by adjusting the proportion (molar ratio) of the repeating units wherein each of R¹ to R⁴ is H and the repeating units wherein each of R¹ to R⁴ is a monovalent organic group among the repeating units (2), the hydrophilicity of the entire alternating copolymer can be adjusted.

The monovalent organic group as each of R¹ to R⁴ is preferably a C₁₋₆ primary or secondary alkyl group which may contain an ethereal oxygen atom, or a group having at least one hydrogen atom in such an alkyl group substituted by a substituent. The alkyl group may be any of linear, branched and cyclic. The substituent may, for example, be a functional group such as a hydroxy group, an amino group or a glycidyl group, or a fluorine atom.

The monovalent organic group as each of R¹ to R⁴ may be -CR⁵ R⁶ R⁷ (wherein each of R⁵, R⁶ and R⁷ which are independent of one another, is a C₁₋₃ alkyl group), a C₁₋₆ alkoxymethyl group, a tetrahydrofuryl group, a tetrahydropyranyl group or -Si(R⁸ )₃ (wherein R⁸ is a C₁₋₆ alkyl group or an aryl group).

Z is preferably OR¹, particularly preferably OH, in view of high hydrophilicity of the repeating units (2).

One type or two or more types of Z may be present in the alternating copolymer, however, one type is preferred in view of stable production.

R is a single bond, a bivalent linking group which may contain an ethereal oxygen atom or a bivalent linking group which may contain a cyclic structure.

The bivalent linking group which may contain an ethereal oxygen atom is preferably a C₁₋₁₀₀ alkylene group or a C₁₋₁₀₀ alkylene group containing an ethereal oxygen atom, more preferably a C₁₋₅₀ alkylene group or a C₁₋₅₀ alkylene group containing an ethereal oxygen atom, particularly preferably a C₁₋₁₀ alkylene group or a C₁₋₁₀ alkylene group containing an ethereal oxygen atom.

The bivalent linking group which may contain a cyclic structure is preferably a cyclohexylene group or a cyclohexylene group containing an ethereal oxygen atom.

R is preferably a single bond, O(CH₂)ₙ or (OCH₂CH₂)ₘ (wherein n is an integer of from 2 to 4, and m is an integer of from 1 to 4), with a view to improving hydrophilicity of the alternating copolymer.

As the plurality of R's present in the alternating copolymer, one type or two or more types may be present, however, one type is preferred in view of stable production.

The alternating copolymer to be used in the present invention is preferably one having, as the repeating units (1), repeating units wherein X is F and Y is F or Cl, and as the repeating units (2), repeating units wherein Z is OR¹, and R is a single bond, O(CH₂)ₙ or (OCH₂CH₂)ₘ (wherein n is an integer of from 2 to 4, and m is an integer of from 1 to 4).

The alternating copolymerization ratio of the alternating copolymer is at least 95%. It is preferably from 95 to 100%, particularly preferably from 97 to 100%, whereby a hydrophobic domain and a hydrophilic domain will be evenly distributed.

The alternating copolymerization ratio of a copolymer is a proportion of the number of combinations such that repeating units based on different monomers are adjacent to each other, based on the total number of combinations of adjacent two repeating units. For example, in a case where the copolymer is represented by 1·2·1·2·2·1·2·1·2·1·2 (wherein 1 represents repeating unit (1) and 2 represents repeating unit (2)), the number of combinations of adjacent two polymerized units is 10, and the number of combinations such that repeating units based on different monomers are adjacent to each other is 9, whereby the alternating copolymerization ratio is 90%.

In a copolymer wherein the alternating copolymerization ratio is less than 95% (hereinafter also referred to as "random copolymer"), a portion where the proportion of the repeating units (1) is high and a portion where the proportion of the repeating units (2) is high are present, and hydrophilic groups (OH, NH₂ , COOH or SO₃ H) are unevenly distributed. Accordingly, it is considered that there is a dispersion of properties (e.g. hydrophilicity or hydrophobicity) in a random copolymer according to its portion, whereby hydrophilizing performance will not sufficiently be achieved.

On the other hand, in an alternating copolymer having an alternating copolymerization ratio of at least 95%, the repeating units (1) and the repeating units (2) are substantially uniformly arranged. Accordingly, such an alternating copolymer is considered to have a high affinity with both of the resin porous material and water, and achieve a high hydrophilizing performance. For example, an alternating copolymer having an alternating copolymerization ratio of the repeating units (1) and the repeating units (2) wherein R¹ is H of at least 95%, has a structure such that hydrophobic repeating units and hydrophilic repeating units are alternately polymerized in substantially the whole molecules. Since there is no portion where hydrophilic repeating units are unevenly distributed, there is no portion where the affinity with the resin porous material is extremely low, the entire molecules have a high affinity with the resin porous material, and the infiltration property into the resin porous material is high at the time of hydrophilization. Further, since there is no portion where the repeating units (1) are unevenly distributed, there is no portion where the affinity with water is extremely low, and the entire molecules have a high affinity with water. Accordingly, when the resin porous material is treated with the hydrophilizing agent of the present invention, a hydrophilic layer having a high affinity with water is formed not only on the exterior surface of the resin porous material but on the surface inside the pores, whereby the permeability is improved.

The alternating copolymerization ratio of a copolymer is obtained from the polymerizability ratio of a plurality of monomers used for preparation of the copolymer. The alternating copolymerization ratio is improved when the polymerizabilities of the respective monomers are low and close to each other.

The alternating copolymer is preferably constituted only by the repeating units (1) and the repeating units (2), but may contain repeating units (3) other than the repeating units (1) and the repeating units (2) within a range not to impair the effects of the present invention. As the repeating units (3), a vinyl ether having an alkyl group bonded thereto may, for example, be mentioned, with a view to increasing the toughness of the alternating copolymer.

In the alternating copolymer, the proportion of the repeating units (3) is preferably from 0 to 5 mol%, particularly preferably from 0 to 2 mol% in all the repeating units of the alternating copolymer.

The number average molecular weight (Mn) of the alternating copolymer is preferably from 3,000 to 500,000, more preferably from 5,000 to 300,000, particularly preferably from 10,000 to 300,000. When the number average molecular weight (Mn) is at least the lower limit value of the above range, favorable strength of a hydrophilic layer will be obtainable from the hydrophilizing agent composition. When it is at most the upper limit value of the above range, the viscosity of the hydrophilizing agent composition will not be too high.

The molecular weight distribution (Mw/Mn) of the alternating copolymer is preferably from 1 to 5, particularly preferably from 1 to 3. Within the above range, the productivity will improve, and the strength of the hydrophilic layer is expected to improve. Mw represents a weight average molecular weight.

In the hydrophilizing agent composition of the present invention, the content of the alternating copolymer is preferably from 0.01 to 10 mass%, more preferably from 0.05 to 5 mass%, particularly preferably from 1 to 5 mass%, based on the total mass of the hydrophilizing agent composition.

### (Method for producing copolymer)

The method for producing the copolymer of the present invention may be selected from known methods except that as monomers for forming the repeating units (1) and (2), monomers having low polymerization reactivities close to each other are used. For example, the following methods (i) and (ii) may be mentioned.
(i) A method of copolymerizing a monomer which forms repeating units (1) when polymerized and a monomer which forms repeating units (2) when polymerized.
(ii) A method of copolymerizing a monomer which forms repeating units (1) when polymerized and a monomer which forms repeating units to be the repeating units (2) by a chemical reaction (e.g. deprotection reaction) and subjecting the obtained copolymer to a chemical reaction in order to obtain a desired copolymer.

Either of the methods (i) and (ii) is selected considering Z in the repeating units (2). For example, (i) or (ii) is preferred when Z is OH, (i) or (ii) when Z is NH₂, (ii) when Z is COOH and (ii) when Z is SO₃H.

Now, a preferred embodiment of the method for producing the alternating copolymer wherein Z is OR¹ (hereinafter referred to as "copolymer (A)") will be described.

The production method according to this embodiment comprises the following polymerization step and deprotection step.

Polymerization step: A step of copolymerizing a fluorinated olefin represented by the following formula (3) (hereinafter also referred to as "fluorinated olefin (3)") and a vinyl ether represented by the following formula (4) (hereinafter also referred to as "vinyl ether (4)").

Deprotection step: A step of substituting R⁹ in the polymerized units based on vinyl ether (4) in the copolymer obtained in the above polymerization step with a hydrogen atom to form a hydroxy group.

CF₂ =CXY (3)

CH₂ =CHOR⁹ (4)

In the above formula (3), each of X and Y which are independent of each other, is H, F, CF₃ or Cl. In the above formula (4), R⁹ is a protecting group to be substituted by a hydrogen atom by the deprotection reaction.

That is, the production method according to this embodiment is a method of obtaining a fluorinated olefin/vinyl ether copolymer (hereinafter referred to as "copolymer (B)") having repeating units based on the fluorinated olefin (3) and repeating units based on the vinyl ether (4) in the polymerization step and substituting R⁹ in the repeating units based on the vinyl ether (4) in the copolymer (B) by a hydrogen atom by deprotection reaction to obtain the copolymer (A) having repeating units based on the fluorinated olefin and repeating units based on a vinyl alcohol.

### <Polymerization step>

In the polymerization step, the fluorinated olefin (3) and the vinyl ether (4) are copolymerized to obtain the copolymer (B) having repeating units based on the fluorinated olefin (3) and repeating units based on the vinyl ether (4).

The fluorinated olefin (3) and the vinyl ether (4) provide a high alternating copolymerizability. Accordingly, the alternating copolymerization ratio of the obtainable copolymer (B) (the alternating copolymerization ratio of the repeating units based on the fluorinated olefin (3) and the repeating units based on the vinyl ether (4)) is at least 95% as obtained by probability calculation from the copolymerizability ratio of both the monomers.

Since the alternating copolymerization ratio of the copolymer (B) is at least 95%, the alternating copolymerization ratio of the copolymer (A) obtainable from the copolymer (B) in the subsequent deprotection step (the alternating copolymerization ratio of the repeating units based on the fluorinated olefin (3) and the repeating units based on a vinyl alcohol) is also at least 95%.

The fluorinated olefin (3) may, for example, be specifically tetrafluoroethylene, chlorotrifluoroethylene or hexafluoropropylene. Among them, in view of excellent heat resistance, preferred is tetrafluoroethylene or chlorotrifluoroethylene, particularly preferred is tetrafluoroethylene.

The fluorinated olefin (3) may be used alone or in combination of two or more.

The vinyl ether (4) is a compound having a hydrogen atom of a hydroxy group of a vinyl alcohol substituted by R⁹.

R⁹ is a protecting group which protects a hydroxy group in the form of an ether, and is a group to be substituted by a hydrogen atom by deprotection reaction carried out in the subsequent deprotection step. A hydroxy group is formed when R⁹ is substituted by a hydrogen atom by deprotection reaction.

As R⁹, a protecting group which is commonly used in an organic chemistry field can be used, and in view of availability, preferred is -CR⁵ R⁶ R⁷ (wherein each of R⁵, R⁶ and R⁷ which are independent of one another, is a C₁₋₃ alkyl group), a C₁₋₆ alkoxymethyl group, a tetrahydrofuryl group, a tetrahydropyranyl group or -Si(R⁸)₃ (wherein R⁸ is a C₁₋₆ alkyl group or an aryl group), particularly preferred is -CR⁵R⁶R⁷

The vinyl ether (4) is preferably t-butyl vinyl ether, 1,1-dimethylpropyl vinyl ether, methoxymethyl vinyl ether, tetrahydrofuryl vinyl ether, tetrahydropyranyl vinyl ether, vinyloxytrimethylsilane or vinyloxydimethylphenylsilane, and in view of availability, particularly preferred is t-butyl vinyl ether.

The vinyl ether (4) may be used alone or in combination of two or more.

In the polymerization step, in addition to the fluorinated olefin (3) and the vinyl ether (4), a vinyl ether (5) represented by the following formula (5) may further be copolymerized:

CH₂=CHOR¹⁰ (5)

In the above formula (5), R¹⁰ is a group which does not undergo deprotection reaction under reaction conditions where R⁹ undergoes deprotection reaction.

The vinyl ether (5) is a compound having a hydrogen atom of a hydroxy group of a vinyl alcohol substituted by R¹⁰.

R¹⁰ is a group which does not undergo deprotection reaction under reaction conditions where R⁹ undergoes deprotection reaction, that is, a group which does not undergo deprotection reaction in the deprotection step. In the deprotection step, R⁹ which the repeating units based on the vinyl ether (4) have is substituted by the hydrogen atom by deprotection reaction, and under the reaction conditions of this reaction, R¹⁰ does not undergo deprotection reaction, and the repeating units based on the vinyl ether (5) are maintained as they are. Accordingly, by carrying out the polymerization step using the vinyl ether (5), as the copolymer (B), a copolymer having the repeating units based on the fluorinated olefin (3), the repeating units based on the vinyl ether (4) and the repeating units based on the vinyl ether (5) is obtained, and by sequentially carrying out the deprotection step, as the copolymer (A), a copolymer having the repeating units based on the fluorinated olefin (3), the repeating units based on the vinyl alcohol and the repeating units based on the vinyl ether (5) is obtained.

R¹⁰ may be a group which undergoes deprotection reaction under conditions other than the reaction conditions where R⁹ is substituted by a hydrogen atom by deprotection reaction.

R¹⁰ in the vinyl ether (5) is preferably a C₁₋₆ primary or secondary alkyl group which may contain an ethereal oxygen atom, or a group having at least one hydrogen atom in such an alkyl group substituted by a substituent. The alkyl group may be any of linear, branched and cyclic. The substituent may, for example, be a functional group such as a hydroxy group, an amino group or a glycidyl group, or a fluorine atom.

The vinyl ether (5) may, for example, be specifically an alkyl vinyl ether such as methyl vinyl ether, ethyl vinyl ether, n-butyl vinyl ether, isobutyl vinyl ether or cyclohexyl vinyl ether; a functional group-containing vinyl ether such as hydroxyethyl vinyl ether, hydroxybutyl vinyl ether, aminopropyl vinyl ether or glycidyl vinyl ether; or a fluorinated vinyl ether such as heptafluoropentyl vinyl ether.

The polymerizabilities of the vinyl ether (5) and the vinyl ether (4) are substantially equal. Accordingly, when the vinyl ether (5) is used, the copolymer (B) is obtained by alternating copolymerization of either vinyl ether of the vinyl ether (4) and the vinyl ether (5), and the fluorinated olefin (3). Whether both sides of the repeating units based on the fluorinated olefin (3) in the copolymer (B) are the repeating units based on the vinyl ether (4) or the repeating units based on the vinyl ether (5) is a matter of probability.

When the vinyl ether (5) is used, no deprotection reaction will occur in the repeating units based on the vinyl ether (5) in the copolymer (B). Accordingly, by adjusting the proportion of the vinyl ether (4) and the vinyl ether (5), the proportion of the repeating units based on a vinyl alcohol in the copolymer (A) after the deprotection step can be adjusted. Therefore, by adjusting the amount of hydroxy groups in the copolymer (A), the hydrophilicity of the copolymer (A) can be adjusted.

By radical polymerization of the fluorinated olefin (3), the vinyl ether (4) and the vinyl ether (5) to be used as the case requires, the copolymer (B) is obtained.

A monomer having a vinyl ether group (the vinyl ether (4) and the vinyl ether (5)) may be isomerized or decomposed or may undergo cationic homopolymerization under acidic conditions. Accordingly, with a view to carrying out polymerization stably, it is preferred to carry out radical polymerization under basic conditions, particularly preferred to adjust the pH to be from 8 to 9.

To adjust the pH at the time of polymerization under basic conditions, preferred is a method of adding potassium carbonate, ammonium carbonate or the like to the polymerization medium.

This pH means a pH at room temperature (20 to 25°C).

In a case no vinyl ether (5) is used, the molar ratio of the fluorinated olefin (3) to the vinyl ether (4) (fluorinated olefin (3)/vinyl ether (4)) to be used for copolymerization is preferably from 40/60 to 60/40, more preferably from 45/55 to 55/45, particularly preferably 50/50. When the molar ratio (fluorinated olefin (3)/vinyl ether (4)) is within the above range, an alternating copolymer having the fluorinated olefin (3) and the vinyl ether (4) alternately copolymerized is likely to be obtained.

In a case where the vinyl ether (5) is used, the molar ratio of the fluorinated olefin (3) to the total amount of the vinyl ether (4) and the vinyl ether (5) (fluorinated olefin (3)/(vinyl ether (4)+vinyl ether (5))) to be used for copolymerization is preferably from 40/60 to 60/40, more preferably from 45/55 to 55/45, particularly preferably 50/50. When the molar ratio (fluorinated olefin (3)/(vinyl ether (4)+vinyl ether (5))) is within the above range, an alternating copolymer having the fluorinated olefin (3) and the vinyl ether (4) or the vinyl ether (5) alternately copolymerized is likely to be obtained.

Further, when the vinyl ether (5) is used, the molar ratio of the vinyl ether (4) to the vinyl ether (5) (vinyl ether (4)/vinyl ether (5)) is preferably from 45/5 to 25/25, particularly preferably from 40/10 to 25/25.

As a radical polymerization source, a radical polymerization initiator or ionizing radiation may be mentioned.

As the radical polymerization initiator, a water-soluble initiator or an oil-soluble initiator may be properly used depending upon the polymerization manner or the polymerization medium.

The water-soluble initiator may, for example, be a redox (oxidation-reduction reaction) initiator comprising a combination of a persulfate such as ammonium persulfate and a reducing agent such as hydrogen peroxide, sodium hydrogen sulfite or sodium thiosulfate; an inorganic initiator in which the above redox initiator and a small amount of iron, ferrous salt, silver nitrate or the like coexist; a dibasic acid peroxide such as disuccinic peroxide or diglutaric peroxide; or an organic initiator such as a dibasic acid salt of e.g. azobisisobutyramidine.

The oil-soluble initiator may, for example, be a peroxy ester type peroxide such as t-butyl peroxyacetate or t-butyl peroxypivalate; a dialkyl peroxydicarbonate such as diisopropyl peroxydicarbonate; benzoyl peroxide; or azobisisobutylnitrile.

The radical polymerization initiator is preferably e.g. t-butyl peroxypivalate in view of the handling efficiency, etc.

The radical polymerization initiator may be used alone or in combination of two or more.

The amount of use of the radical polymerization initiator may properly be changed depending upon the type, the polymerization conditions and the like, and is preferably from 0.005 to 5 mass%, particularly preferably from 0.05 to 0.5 mass% to the total amount of monomers used for copolymerization.

The copolymerization manner is not particularly limited, and e.g. bulk polymerization, suspension polymerization, emulsion polymerization or solution polymerization may be employed. Particularly preferred is a solution polymerization using as the polymerization medium an aromatic compound such as xylene or toluene, an alcohol such as t-butyl alcohol, an ester, a fluorochlorocarbon or the like.

The amount of the polymerization medium is preferably from 10 to 200 mass%, particularly preferably from 50 to 100 mass% to the total amount of the monomers used for copolymerization.

Further, the copolymerization manner may be any of batch type, continuous type and semicontinuous type.

As the copolymerization temperature, an optimum value is properly selected depending upon the radical polymerization source, the polymerization medium and the like, and it is preferably from -30 to 150°C, more preferably from 0 to 100°C, particularly preferably from 20 to 70°C.

The copolymerization pressure may also be properly selected depending upon the radical polymerization source, the polymerization medium and the like, and it is preferably from 0.1 to 10 MPa, particularly preferably from 0.2 to 2 MPa.

The copolymerization time is preferably from 4 to 24 hours, particularly preferably from 6 to 12 hours.

The molecular weight of the copolymer (B) can be adjusted by controlling the proportion of the monomers and the polymerization medium, or by using a chain transfer agent.

The number average molecular weight (Mn) of the copolymer (B) is, in the same manner as the alternating copolymer, preferably from 3,000 to 500,000, more preferably from 5,000 to 300,000, particularly preferably from 10,000 to 300,000.

The molecular weight distribution (Mw/Mn) of the copolymer (B) is preferably from 1 to 5, more preferably from 1 to 3, in the same manner as the alternating copolymer.

### <Deprotection step>

In the deprotection step, R⁹ in the repeating units based on the vinyl ether (4) in the copolymer (B) obtained in the polymerization step is substituted by a hydrogen atom by deprotection reaction to form a hydroxy group, whereby the repeating units based on the vinyl ether (4) are converted to repeating units based on a vinyl alcohol, and a copolymer (A) (a copolymer which has OH as Z) having repeating units based on the fluorinated olefin (3) and repeating units based on a vinyl alcohol is obtained. In a case where the copolymer (B) contains repeating units based on the vinyl ether (5), since R¹⁰ in the repeating units based on the vinyl ether (5) is maintained as it is without undergoing deprotection reaction, a copolymer (A) (a copolymer which has OH and OR¹⁰ as Z) having polymerized units based on the fluorinated olefin (3), polymerized units based on a vinyl alcohol and polymerized units based on the vinyl ether (5) is obtained.

As a method of substituting R⁹ in the monomer based on the vinyl ether (4) in the copolymer (B) by a hydrogen atom by deprotection reaction, deprotection reaction of a protected alcohol by an acid, heat or light, which is commonly carried out, may be employed. Particularly, it is preferred to substitute R⁹ by a hydrogen atom using an acid, with a view to preventing the obtainable copolymer(A) from being colored.

The acid to be used for deprotection reaction may, for example, be an inorganic acid such as sulfuric acid, hydrochloric acid or nitric acid or an organic acid such as acetic acid, butyric acid or trifluoroacetic acid.

As the deprotection reaction with an acid, preferred is (I) deprotection reaction in a mixed solution of sulfuric acid/ethanol/water, (II) deprotection reaction in a mixed solution of hydrochloric acid/dioxane, or (III) deprotection reaction in a mixed solution of trifluoroacetic acid/methylene chloride. However, the deprotection reaction with an acid is not limited to the above reaction systems (I) to (III), and the deprotection reaction may be carried out in an aqueous system or in a non-aqueous system.

Further, the deprotection reaction with an acid may be carried out by using a photo acid generator which generates an acid by irradiation with light. The photo acid generator may, for example, be an onium salt, a halogen-containing compound, a diazoketone compound, a sulfone compound or a sulfonic acid compound. Specific examples include diphenyliodonium triflate, triphenylsulfonium triflate, phenyl-bis(trichloromethyl)-s-triazine, methoxyphenyl-bis(trichloromethyl)-s-triazine, 4-trisphenacylsulfone and 1,8-naphthalene dicarboxylic acid imide triflate.

In the deprotection step, depending upon the application of the copolymer (A), the deprotection reaction may be terminated before all the protecting groups which the copolymer (B) has undergo deprotection. In such a case, a copolymer (A) (a copolymer which has OH and OR⁹ as Z) having repeating units based on the fluorinated olefin (3), repeating units based on the vinyl ether (4) and repeating units based on a vinyl alcohol is obtained.

In a case where the copolymer (B) contains repeating units based on the vinyl ether (5), by terminating the deprotection reaction during the reaction, a copolymer (A) (copolymer which has OH, OR⁹ and OR¹⁰ as Z) having repeating units based on the fluorinated olefin (3), repeating units based on the vinyl ether (4), polymerized units based on a vinyl alcohol and polymerized units based on the vinyl ether (5) is obtained.

As mentioned above, by terminating the deprotection reaction during the reaction, the proportion of the repeating units based on the vinyl ether (4) and the repeating units based on a vinyl alcohol, or the proportion of the repeating units based on the vinyl ether (4), the repeating units based on a vinyl alcohol and the repeating units based on the vinyl ether (5) is adjusted, whereby hydrophilicity, crystallinity and the like of the obtainable copolymer (A) can be adjusted.

Heretofore, to produce a fluorinated olefin/vinyl alcohol copolymer, commonly employed is a method of hydrolyzing a fluorinated olefin/vinyl acetate copolymer obtained by copolymerizing a fluorinated olefin and vinyl acetate. However, by this method, a fluorinated olefin/vinyl acetate copolymer having an alternating copolymerization ratio of at least 95% cannot be obtained. That is, since the polymerizabilities of the fluorinated olefin and vinyl acetate are different, the fluorinated olefin and vinyl acetate are randomly copolymerized, and in the obtainable fluorinated olefin/vinyl acetate copolymer, a portion where the proportion of the repeating units based on the fluorinated olefin is high and a portion where the proportion of the repeating units based on vinyl acetate is high are present. Accordingly, also in the fluorinated olefin/vinyl alcohol copolymer obtainable from the fluorinated olefin/vinyl acetate copolymer, a portion where the proportion of the repeating units based on the fluorinated olefin is high and a portion where the proportion of the repeating units based on a vinyl alcohol is high are present, and the hydroxy groups are unevenly distributed. Therefore, the fluorinated olefin/vinyl alcohol copolymer has a dispersion of properties depending upon its portion, which is considered to decrease the infiltration property into the resin porous material and the permeability.

Whereas, according to the production method according to this embodiment, the fluorinated olefin (3) and the vinyl ether (4) or the vinyl ether (5) are substantially alternately polymerized, whereby hydroxy groups are evenly distributed in the polymer chain. Accordingly, the hydroxy groups are not concentrated on a specific portion, whereby an extremely high hydrophilicity at a specific portion of the polymer chain can be suppressed, whereby the copolymer (A) has excellent infiltration property into the resin porous material and the permeability.

Further, in the case of the method of hydrolyzing the fluorinated olefin/vinyl acetate copolymer obtained by copolymerizing the fluorinated olefin and vinyl acetate, there is a problem of coloring at the time of hydrolysis, a problem of low reaction rate when an acid is used for hydrolysis, etc.

Whereas, by the production method according to this embodiment, in a case where the repeating units based on a vinyl ether are deprotected, coloring is less likely to occur. Further, even by deprotection with an acid, a sufficient reaction rate will be obtained. Accordingly, a high quality fluorinated olefin/vinyl alcohol copolymer which is less colored can be produced at a sufficiently high productivity. The reason why deprotection with an acid proceeds at a sufficient reaction rate according to this embodiment, is estimated to be such that the ethereal oxygen atom of the vinyl ether (4) is likely to undergo protonation than the acetic acid group of vinyl acetate.

### (Solvent)

The solvent is preferably a solvent in which the alternating copolymer is dissolved or dispersed, particularly preferably a solvent in which the alternating copolymer is dissolved.

The solvent is preferably an alcohol, a ketone, an ester or water.

The alcohol may be a C₁₋₁₀ alcohol, preferably methanol or ethanol. Particularly, in a case where the object to be treated with the hydrophilizing agent composition is the resin porous material, preferred is methanol, whereby excellent infiltration property into the resin porous material will be obtained.

The ketone may be a C₂₋₁₀ alkyl ketone.

The ester may be a C₂₋₁₀ ester which may contain an ethereal oxygen atom.

The solvent preferably contains at least an alcohol, more preferably contains an alcohol in a proportion of at least 70 mass%, more preferably consists solely of an alcohol, particularly preferably consists solely of methanol.

Since the alternating copolymer used in the present invention has an alternating copolymerization ratio of at least 95% and having the repeating units (1) and the repeating units (2) alternately polymerized in substantially the entire polymer, it may sufficiently be dissolved even when only methanol is used as the solvent. In a case where only methanol is used as the solvent, the infiltration property into the resin porous material is particularly favorable. On the other hand, in the case of using a copolymer having an alternating copolymerization ratio less than 95%, it has been required to use a solvent with a relatively high solubility such as ethanol in combination with methanol, so as to improve the solubility, and further to use water in combination so that the copolymer and water preliminarily become miscible with each other. In the case of using such a ternary solvent, the infiltration property into the resin porous material may be insufficient due to a low proportion of methanol, or the liquid tends to be unstable and deposition may occur since the copolymer is water-insoluble.

The boiling point of the solvent is preferably from 40 to 150°C, more preferably from 40 to 100°C, particularly preferably from 40 to 80°C under normal pressure. Within the above range, the temperature at the time of drying the solvent can be lowered, and the burden to the material may be reduced.

Only one type of the solvent may be used, or a mixed solvent of two or more may be used. It is preferred to use only one type in view of quality stabilization.

The solvent is preferably contained in an amount of from 70 to 99.9 mass%, more preferably from 80 to 99.9 mass%, particularly preferably from 90 to 99.9 mass% in the hydrophilizing agent composition.

### (Other compound)

The hydrophilizing agent composition may contain, in addition to the copolymer and the solvent, other compound. Such other compound may, for example, be a surfactant or an antioxidant.

Such other compound is preferably contained in an amount of from 0.01 to 5 mass%, more preferably from 0.03 to 3 mass%, particularly preferably from 0.05 to 2 mass% in the hydrophilizing agent composition.

The hydrophilizing agent composition of the present invention is preferably a composition comprising from 0.5 to 5 mass% of an alternating copolymer wherein X=F, Y=F, R=single bond, and Z=OH, and from 90 to 100 mass% of methanol.

### (Application of hydrophilizing agent composition)

The hydrophilizing agent composition of the present invention is used for hydrophilizing a hydrophobic material.

Here, "the hydrophobic material" means a material having a higher hydrophobicity than the alternating copolymer contained in the hydrophilizing agent composition.

Whether the material has a hydrophobicity higher than that of the alternating copolymer can be confirmed by measuring the water contact angle of the material.

The hydrophobic material (material to be treated) to be hydrophilized with the hydrophilizing agent composition of the present invention and the hydrophilizing method will be described below as the hydrophilizing method of the present invention.

Further, the hydrophilizing agent composition of the present invention may be used also as a primer. By using the hydrophilizing agent composition of the present invention as a primer, a resin (such as a polyvinyl alcohol) which cannot directly be applied to the original material to be treated may be applied on the primer.

### [Hydrophilizing method]

The hydrophilizing method of the present invention comprises treating a material to be treated by using the hydrophilizing agent composition of the present invention.

The material to be treated is not particularly limited so long as it has a hydrophobicity higher than that of the alternating copolymer contained in the hydrophilizing agent composition.

The material to be treated may be made of an organic material such as a resin or an inorganic material such as glass or a ceramic. Among them, preferred is a resin, which is less likely to be broken. The resin is not particularly limited, however, preferred is a polyimide, a polysulfone or a fluorinated resin, which has high hydrophobicity and heat resistance. A fluorinated resin is particularly preferred, which has a high hydrophobicity. The fluorinated resin will be described in detail hereinafter.

The form of the material to be treated is not particularly limited, and a film, a tube, a tape, a woven fabric or the like may be mentioned. Such a material may have a hollow structure in the inside. The film may further be processed into a disk shape or a cartridge shape.

The material to be treated may be a porous material or a non-porous material, but preferred is a porous material, in view of applicability of the present invention.

The porous material is a formed material having pores.

Since the hydrophilizing agent composition of the present invention contains the solvent in addition to the copolymer, it infiltrates into the interior of the pores of the porous material, and can hydrolyze even the surface of the interior of the pores. Such a porous material is excellent in the permeability and is useful for an application such as a separation membrane for an aqueous liquid.

The porosity of the porous material is preferably from 15 to 95%, particularly preferably from 75 to 95%.

The pore diameter of the porous material is preferably from 0.02 to 30 µm.

The porosity of the porous material is a value calculated from the density of the material measured and the true density of the raw material.

Further, the pore diameter of the porous material is a value measured by observation with an electric microscope or by a bubble point method.

To treat the material to be treated by using the hydrophilizing agent composition, a known method may be used. For example, a method of contacting the hydrophilizing agent composition with the material to be treated, followed by drying may be mentioned. When the hydrophilizing agent composition of the present invention is contacted with the material to be treated, the contact surface is covered with the hydrophilizing agent composition. When the solvent is removed by drying, the copolymer is attached to the contact surface to form a hydrophilic layer, thus improving the hydrophilicity.

In a case where the material to be treated is a porous material and the porous material is impregnated with the hydrophilizing agent composition, not only the outer surface of the porous material but also the surface of the pores in the inside is hydrophilized.

To contact the hydrophilizing agent composition with the material to be treated, a method of applying the hydrophilizing agent composition to the material, a method of impregnating the material with the hydrophilizing agent composition or the like may be mentioned, and the method is selected depending upon the material to be treated.

Application of the hydrophilizing agent composition to the material to be treated may be carried out by a known method such as a spin coating method, a bar coating method, a casting method or a spraying method.

Impregnation of the resin porous material with the hydrophilizing agent composition may be carried out by a known method such as spraying, immersion, injection or suction. In view of easiness of the process, preferred is immersion.

Drying is carried out to remove the solvent contained in the hydrophilizing agent composition. The drying method is not particularly limited, and a known method may be employed. In view of easiness of the process, preferred is a method of fixing the resin porous material impregnated with the hydrophilizing agent composition to a pin frame, followed by air drying, or a method of heating it in the air under normal pressure or under a reduced pressure. The heating temperature is preferably from 40 to 150°C, and the heating time is preferably from 10 minutes to 3 hours.

As described above, by the hydrophilizing method of the present invention, it is possible to make the material to be treated such as the resin porous material have high hydrophilicity by a simple treatment of only contacting the hydrophilizing agent composition with the material to be treated, followed by drying.

### [Hydrophilized material]

The hydrophilized material of the present invention is obtained by hydrophilizing a material to be treated with the hydrophilizing agent composition of the present invention.

The material to be treated may be the same one as mentioned for the above hydrophilizing method. The material to be treated is preferably a resin porous material, particularly preferably a fluorinated resin porous material. That is, the hydrophilized material is preferably a hydrophilized resin porous material, particularly preferably a hydrophilized fluorinated resin porous material.

The hydrophilized material of the present invention, particularly the hydrophilized resin porous material, is useful as a separation membrane for an aqueous liquid.

The aqueous liquid means an aqueous solution containing water as the main component in the solvent, and may, for example, be water and sewage, rain water, waste water, body fluid, chemicals, drinking water, juice or alcoholic drink.

The separation membrane for an aqueous liquid may, for example, be a filtration membrane or a medical filter.

However, the application of the hydrophilized material of the present invention is not limited to the above separation membrane, and it may also be applicable to a battery separator, a primer and the like.

### [Method for producing hydrophilized resin porous material]

As the method for producing the hydrophilized resin porous material of the present invention, preferred is to impregnate the resin porous material with the hydrophilizing agent composition of the present invention, followed by drying. Preferred conditions for impregnation of the resin porous material with the hydrophilizing agent composition and drying are as described above.

### (Resin porous material)

The resin porous material is a porous material constituted by a resin.

The resin porous material is constituted by a resin having a hydrophobicity higher than that of the alternating copolymer contained in the hydrophilizing agent composition. Such a resin is not particularly limited, and is preferably a polyimide, a polyamide, a polysulfone or a fluorinated resin, in view of high hydrophobicity and heat resistance. Particularly preferred is a fluorinated resin in view of high hydrophobicity.

The fluorinated resin may, for example, be polytetrafluofoethylene (PTFE), a tetrafluofoethylene/perfluoroalkyl vinyl ether copolymer (PFA), a tetrafluofoethylene/hexafluoropropylene copolymer (FEP), a tetrafluofoethylene/hexafluoropropylene/perfluoroalkyl vinyl ether copolymer (EPE), a tetrafluofoethylene/ethylene copolymer (ETFE), polychlorotrifluoroethylene (PCTFE), a chlorotrifluoroethylene/ethylene copolymer (ECTFE), polyvinylidene fluoride (PVDF) or polyvinyl fluoride (PVF).

The fluorinated resin is particularly preferably tetrafluofoethylene (PTFE) or polyvinylidene fluoride (PVDF) in view of availability.

### EXAMPLES

Now, the present invention will be described in further detail with reference to Examples and Comparative Examples. However, it should be understood that the present invention is by no means restricted to the following description.

### [Measurement method]

### (Number average molecular weight (Mn), molecular weight distribution (Mw/Mn))

The number average molecular weight (Mn) and the molecular weight distribution (Mw/Mn) of each of copolymers obtained in Examples were measured by gel permeation chromatography (GPC) as calculated as polystyrene gel using a high performance GPC apparatus "HLC-8220GPC" manufactured by Tosoh Corporation. As an eluent, tetrahydrofuran was used.

### (Copolymer composition)

The copolymer composition of each of copolymers obtained in Examples was calculated from the measurement results of ¹H NMR (nuclear magnetic resonance) spectrum any ¹⁹F NMR spectrum of the obtained copolymer.

### (Structure of copolymer)

The structure of each of copolymers obtained in Examples was identified by measuring a ¹³C NMR spectrum and an IR (infrared absorption) spectrum of the obtained copolymer.

### (Method of calculating alternating copolymerization ratio)

Based on the copolymerizability ratio calculated from the Q value and the e value which are specific to each monomer, sequence analysis was carried out by Monte Carlo method.

### (Method of measuring moisture content)

Using a coulometric moisture meter "CA-1 00" manufactured by Mitsubishi Chemical Corporation, the moisture content in a liquid was measured.

### (Permeability test)

A porous membrane was set to a solvent-resistant stirred cell, (manufactured by Nihon Millipore K.K.), and deionized water was made to pass therethrough with a pressure applied, and a liquid flow amount in a certain time was measured to measure the filtration flux [unit: g/(cm²·min)] of deionized water per unit area. A high filtration flux means that the membrane is highly permeable to water (the membrane has higher permeability).

### [PREPARATION EXAMPLE 1: Preparation of copolymer (A1)]

### (Polymerization step)

Into a stainless steel autoclave having an internal capacity of 1 L (liter) provided with a stirring machine, 317 g of t-butyl alcohol, 111 g of t-butyl vinyl ether (hereinafter also referred to as "t-BuVE"), 0.98 g of potassium carbonate, and 2.72 g of a 50 mass% 1,1,1,2,2,3,3,4,4,5,5,6,6-tridecafluorohexane solution of perbutyl pivalate (hereinafter also referred to as "PBPV") were charged, and the autoclave was freeze-deaerated with liquid nitrogen to remove oxygen in the system. Then, 113 g of tetrafluofoethylene (hereinafter also referred to as "TFE") was introduced into the autoclave, followed by heating to 55°C. The pressure at this time was 1.62 MPa. Then, the reaction was continued for 8 hours, and when the pressure decreased to 0.86 MPa, the autoclave was cooled with water, and unreacted gas was purged to terminate the reaction. The obtained polymer solution was poured into methanol, and the formed copolymer was precipitated and vacuum dried to obtain copolymer (B1) as a solid. The amount of the copolymer (B1) obtained was 121 g and the yield was 54%.

Of the obtained copolymer (B1), Mn was 24,000, Mw/Mn was 1.5, and the copolymer compositional ratio was TFE/t-BuVE=50/50 (mol%). Further, by calculation from the copolymerizability ratio of TFE and t-BuVE, the alternating copolymerization ratio of the copolymer (B1) was at least 95%, whereby the copolymer (B1) was found to substantially have an alternating structure.

### (Deprotection step)

4.0 g of the copolymer (B1), 4.0 g of 36 mass% concentrated hydrochloric acid and 52 g of ethanol were put in a 100 mL flask and stirred with heating at an internal temperature of 78°C to carry out deprotection reaction. The reaction was continued for 8 hours, and the reaction liquid was dropwise added to water to precipitate the resulting copolymer, which was washed with water and vacuum dried at 90°C to obtain 2.5 g of copolymer (A1).

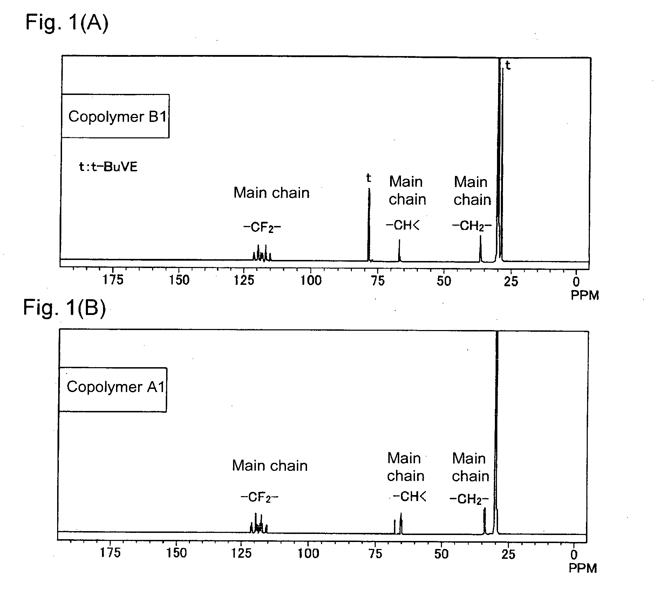

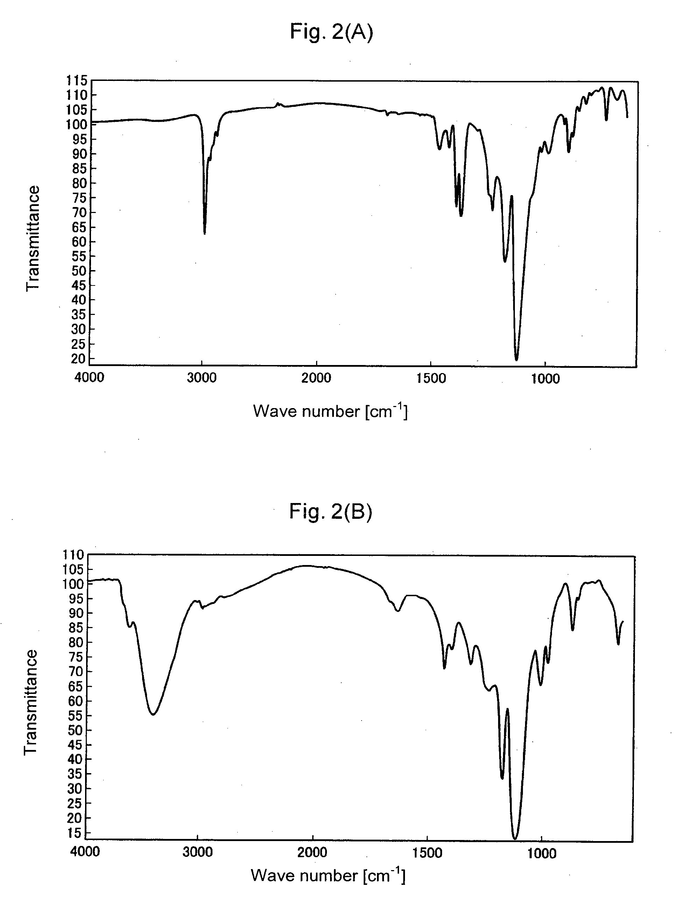

With respect to the copolymer (B1) and the obtained copolymer (A1), a ¹³C NMR spectrum and an IR spectrum were measured. The measurement results of the ¹³C NMR spectrum are shown in Fig. 1, and the measurement results of the IR spectrum are shown in Fig. 2. From these results, it was confirmed that in the copolymer (A1), at least 99% of protecting groups (t-butyl groups derived from t-BuVE) were deprotected by hydrolysis to form hydroxy groups.

### (In Fig. 1(A), peaks represented by "t" are peaks attributable to t-butyl.)

### [PREPARATION EXAMPLE 2: Preparation of copolymer (A2)]

### (Polymerization step)

Into a stainless steel autoclave having an internal capacity of 1 L provided with a stirring machine, 354 g of methyl acetate, 63 g of vinyl acetate (hereinafter also referred to as "VAc"), and 2.3 g of a 50 mass% 1,1,1,2,2,3,3,4,4,5,5,6,6-tridecafluorohexane solution of PBPV were charged, and the autoclave was freeze-deaerated with liquid nitrogen to remove oxygen in the system. Then, 179 g of TFE was introduced into the autoclave and heated to 55°C. Then, the reaction was continued for 10 minutes, and the autoclave was cooled with water and unreacted gas was purged to terminate the reaction. The obtained polymer solution was poured into methanol, and the formed copolymer was precipitated and vacuum dried to obtain copolymer (B2) as a solid. The amount of the copolymer (B2) obtained was 110 g, and the yield was 45%.

Of the obtained copolymer (B1), Mn was 84,000, Mw/Mn was 3.3, and the copolymer compositional ratio was TFE/VAc=50/50 (mol%). Further, by calculation from the copolymerizability ratio of TFE and VAc, the alternating copolymerization ratio of the copolymer (B2) was from 80 to 85%.

### (Deprotection step)

4.1 g of the copolymer (B2), 4.0 g of 36 mass% concentrated hydrochloric acid and 52 g of ethanol were put in a 100 mL flask and stirred with heating at an internal temperature of 78°C to carry out deprotection reaction. The reaction was continued for 32 hours, and the reaction liquid was dropwise added to water to precipitate the resulting copolymer, which was washed with water and vacuum dried at 40°C to obtain 2.7 g of copolymer (A2).

With respect to the copolymer (B2) and the obtained copolymer (A2), a ¹³C NMR spectrum and an IR spectrum were measured. From these results, it was confirmed that in the copolymer (A2), at least 99% of protecting groups (acetyl groups) were deprotected to form hydroxy groups.

### [PREPARATION EXAMPLE 3: Preparation of copolymer (A3)]

### (Polymerization step)

Into a stainless steel autoclave having an internal capacity of 1 L provided with a stirring machine, 382 g of t-butyl alcohol, 68.0 g of 2-hydroxyethyl vinyl ether (hereinafter also referred to as "HEVE"), 1.09 g of potassium carbonate and 4.36 g of a 50 mass% 1,1,1,2,2,3,3,4,4,5,5,6,6-tridecafluorohexane solution of PBPV were charged, and the autoclave was freeze-deaerated with liquid nitrogen to remove oxygen in the system. Then, 89 g of TFE was introduced into the autoclave and heated to 55°C. The pressure at this time was 1.08 MPa. Then, the reaction was continued for 3.5 hours, and when the pressure decreased to 0.04 MPa, the autoclave was cooled with water, and unreacted gas was purged to terminate the reaction. The obtained polymer solution was diluted with ethanol and poured into hexane, and the formed copolymer was precipitated. Then, vacuum drying was carried out to obtain copolymer (A3) as a solid. The amount of the copolymer (A3) obtained was 128 g, and the yield was 81 %.

Of the obtained copolymer (A3), Mn was 114,000, Mw/Mn was 3.9, and the copolymer compositional ratio was TFE/HEVE=50/50 (mol%). Further, by calculation from the copolyemerizability ratio of TFE and HEVE, the alternating copolymerization ratio of the copolymer (A3) was at least 95%, and the copolymer (A3) was found to substantially have an alternating structure.

### [PREPARATION EXAMPLE 4: Preparation of copolymer (A4)]

### (Polymerization step)

Into a stainless steel autoclave having an internal capacity of 1 L provided with a stirring machine, 377 g of t-butyl alcohol, 25.3 g of 2-butanol, 89.7 g of 4-hydroxybutyl vinyl ether (hereinafter also referred to as "HBVE"), 1.15 g of potassium carbonate and 3.45 g of a 50 mass% 1,1,1,2,2,3,3,4,4,5,5,6,6-tridecafluorohexane solution of PBPV were charged, and the autoclave was freeze-deaerated with liquid nitrogen to remove oxygen in the system. Then, 78.8 g of TFE was introduced into the autoclave and heated to 55°C. The pressure at this time was 1.13 MPa. Then, the reaction was continued for 4.5 hours, and when the pressure decreased to 0.57 MPa, the autoclave was cooled with water, and unreacted gas was purged to terminate the reaction. The obtained polymer solution was diluted with ethanol and poured into hexane, and the formed copolymer was precipitated. Then, vacuum drying was carried out to obtain copolymer (A4) as a solid. The amount of the copolymer (A4) obtained was 113 g, and the yield was 67%.

Of the obtained copolymer (A4), Mn was 78,000, Mw/Mn was 4.9, and the - copolymer compositional ratio was TFE/HBVE=49/51 (mol%). Further, by calculation from the copolyemerizability ratio of TFE and HBVE, the copolymer (A4) had an alternating copolymerization ratio of at least 95% and was found to substantially have an alternating structure.

### [PREPARATION EXAMPLE 5: Preparation of copolymer (A5)]

### (Polymerization step)

Into a stainless steel autoclave having an internal capacity of 1 L provided with a stirring machine, 410 g of t-butyl alcohol, 55.4 g of 2-butanol, 55.4 g of diethylene glycol monovinyl ether (hereinafter also referred to as "DEGMVE"), 1.73 g of potassium carbonate and 2.31 g of a 50 mass% 1,1,1,2,2,3,3,4,4,5,5,6,6-tridecafluorohexane solution of PBPV were charged, and the autoclave was freeze-deaerated with liquid nitrogen to remove oxygen in the system. Then, 50.8 g of TFE was introduced into the autoclave and heated to 55°C. The pressure at this time was 0.62 MPa. Then, the reaction was continued for 2.7 hours, and when the pressure decreased to 0.11 MPa, the autoclave was cooled with water, and unreacted gas was purged to terminate the reaction. The obtained polymer solution was diluted with ethanol and poured into hexane, and the formed copolymer was precipitated. Then, vacuum drying was carried out to obtain copolymer (A5) as a solid. The amount of the copolymer (A5) obtained was 81.2 g, and the yield was 75%.

Of the obtained copolymer (A5), Mn was 16,000, Mw/Mn was 2.4, and the copolymer compositional ratio was TFE/DEGMVE=49/51 (mol%). Further, by calculation from the copolyemerizability ratio of TFE and DEGMVE, the copolymer (A5) had an alternating copolymerization ratio of at least 95% and was found to substantially have an alternating structure.

### [EXAMPLE 1]

1 g of the copolymer (A1) obtained in Preparation Example 1 was dissolved in 99 g of methanol (moisture content: 271 ppm) to prepare a hydrophilizing agent composition. In this hydrophilizing agent composition, a PTFE porous membrane (manufactured by Advantech Co., Ltd. tradename: T-100A-047A, porosity: 79%, pore diameter: 1.0 µm) was immersed for 60 minutes, followed by drying at 50°C for 30 minutes to obtain a hydrophilized PTFE porous membrane.

The mass of the obtained hydrophilized PTFE porous membrane was measured, whereupon it was increased by 2.6% relative to the mass of the original PTFE porous membrane.

Further, the obtained hydrophilized PTFE porous membrane was subjected to the permeability test with a pressure difference of 0.15 MPa, whereupon the filtration flux of deionized water was 2.5 g/(cm² ·min).

### [EXAMPLE 2]

A hydrophilized PTFE porous membrane was obtained in the same manner as in Example 1 except that copolymer (A3) was used instead of copolymer (A1).

The mass of the obtained hydrophilized PTFE porous membrane was measured, whereupon it was increased by 3.7% relative to the mass of the original PTFE porous membrane.

Further, the obtained hydrophilized PTFE porous membrane was subjected to the permeability test with a pressure difference of 0.15 MPa, whereupon the filtration flux of deionized water was 7.7 g/(cm²·min).

### [EXAMPLE 3]

A hydrophilized PTFE porous membrane was obtained in the same manner as in Example 1 except that copolymer (A4) was used instead of copolymer (A1).

The mass of the obtained hydrophilized PTFE porous membrane was measured, whereupon it was increased by 4.0% relative to the mass of the original PTFE porous membrane.

Further, the obtained hydrophilized PTFE porous membrane was subjected to the permeability test with a pressure difference of 0.15 MPa, whereupon the filtration flux of deionized water was 7.6 g/(cm²·min).

### [EXAMPLE 4]

A hydrophilized PTFE porous membrane was obtained in the same manner as in Example 1 except that copolymer (A5) was used instead of copolymer (A1).

The mass of the obtained hydrophilized PTFE porous membrane was measured, whereupon it was increased by 3.3% relative to the mass of the original PTFE porous membrane.

Further, the obtained hydrophilized PTFE porous membrane was subjected to the permeability test with a pressure difference of 0.15 MPa, whereupon the filtration flux of deionized water was 21.9 g/(cm²·min).

### [COMPARATIVE EXAMPLE 1]

A hydrophilized PTFE porous membrane was obtained in the same manner as in Example 1 except that copolymer (A2) was used instead of copolymer (A1).

The mass of the obtained hydrophilized PTFE porous membrane was measured, whereupon it was increased by 4.3% relative to the mass of the original PTFE porous membrane.

Further, the obtained hydrophilized PTFE porous membrane was subjected to the permeability test with a pressure difference of 0.15 MPa, whereupon the filtration flux of deionized water was 1.7 g/(cm²·min).

### [COMPARATIVE EXAMPLE 2]

A hydrophilized PTFE porous membrane was obtained in the same manner as in Example 1 except that methanol (moisture content: 271 ppm) was used instead of the hydrophilizing agent composition. The obtained PTFE porous membrane was subjected to the permeability test with a pressure difference of 0.15 MPa, whereupon the membrane was not permeable to deionized water.

In Examples 1 to 4 in which a methanol solution of the copolymer (A1) having an alternating copolymerization ratio of the repeating units (1) and the repeating units (2) of at least 95% was used as the hydrophilizing agent composition, the filtration flux of deionized water was good. That is, the hydrophilicity of the PTFE porous membrane was improved, and the membrane became a membrane well permeable to water.

Whereas, in Comparative Example 1 in which a methanol solution of the copolymer (A2) having an alternating copolymerization ratio of the repeating units (1) and the repeating units (2) of less than 95% was used as the hydrophilizing agent composition, the filtration flux of deionized water was about 60% of that in Example 1 and insufficient, even though the PTFE porous membrane was sufficiently impregnated with the hydrophilizing agent composition and its weight was increased. That is, the membrane was a membrane hardly permeable to water.

In Comparative Example 2 in which methanol was used instead of the hydrophilizing agent composition, the obtained membrane was totally impermeable to water.

### INDUSTRIAL APPLICABILITY

It is possible to impart high hydrophilicity efficiently to a material to be treated only by treating the material to be treated such as a resin porous material with the hydrophilizing agent composition of the present invention.

In a case where a resin porous material is used as the material to be treated, the obtained hydrophilized resin porous material has high water permeability and is useful as a separation membrane for an aqueous liquid, and it may be used, for example, as a filtration membrane or a medical filter. Further, it may also be used as a separator for a battery utilizing the imparted hydrophilicity.

Further, in a case where the hydrophilizing agent composition of the present invention is used as a primer, a resin which cannot be applied to the original resin porous material may be applied on the primer, such being industrially useful.

The entire disclosure of Japanese Patent Application No. 2011-125049 filed on June 3, 2011 including specification, claims, drawings and summary is incorporated herein by reference in its entirety.

## Claims

1. A hydrophilizing agent composition comprising a copolymer having an alternating copolymerization ratio of repeating units represented by the following formula (1) and repeating units represented by the following formula (2) of at least 95%, and a solvent: 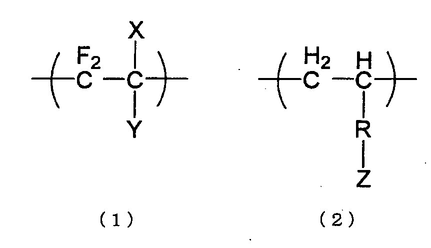 in the above formula (1), each of X and Y which are independent of each other, is H, F, CF₃ or Cl;
in the above formula (2), Z is OR¹, NHR², COOR³ or SO₃R⁴, R is a single bond, a bivalent linking group which may contain an ethereal oxygen atom, or a bivalent linking group which may contain a cyclic structure, and each of R¹ to R⁴ which are independent of one another, is H or a monovalent organic group;
provided that in the repeating units represented by the above formula (2) contained in the copolymer, the proportion of the repeating units wherein each of R¹ to R⁴ is H is at least 50 mol%.

2. The hydrophilizing agent composition according to Claim 1, wherein the content of the alternating copolymer is from 0.01 to 10 mass% based on the total mass of the hydrophilizing agent composition.

3. The hydrophilizing agent composition according to Claim 1 or 2, wherein the number average molecular weight of the alternating copolymer is from 3,000 to 500,000, and the molecular weight distribution (Mw/Mn) is from 1 to 5.

4. The hydrophilizing agent composition according to any one of Claims 1 to 3, wherein X is F, and Y is F or Cl.

5. The hydrophilizing agent composition according to any one of Claims 1 to 4, wherein Z is OR¹.

6. The hydrophilizing agent composition according to any one of Claims 1 to 5, wherein R is a single bond, O(CH₂)ₙ or (OCH₂CH₂)ₘ (wherein n is an integer of from 2 to 4, and m is an integer of from 1 to 4).

7. The hydrophilizing agent composition according to any one of Claims 1 to 6, wherein the amount of the solvent in the hydrophilizing agent composition is from 70 to 99.9 mass%.

8. The hydrophilizing agent composition according to Claim 7, wherein the solvent contains an alcohol in a proportion of at least 70 mass%.

9. A method for hydrophilizing a material, which comprises treating a material to be treated by using the hydrophilizing agent composition as defined in any one of Claims 1 to 8.

10. A method for producing a hydrophilized resin porous material, which comprises impregnating a resin porous material with the hydrophilizing agent composition as defined in any one of Claims 1 to 8, followed by drying.

11. The method for producing a hydrophilized resin porous material according to Claim 10, wherein the resin constituting the resin porous material is a fluorinated resin.

12. The method for producing a hydrophilized resin porous material according to Claim 11, wherein the fluorinated resin is polytetrafluoroethylene or polyvinylidene fluoride.

13. A hydrophilized material obtained by hydrophilizing a material to be treated with the hydrophilizing agent composition as defined in any one of Claims 1 to 8.

14. The hydrophilized material according to Claim 13, wherein the material to be treated is a resin porous material, and the resin constituting the resin porous material is a fluorinated resin.

15. The hydrophilized material according to Claim 13 or 14, which is for a separation membrane for an aqueous liquid.
